# EUROPEAN PATENT APPLICATION

(11) **EP 1 041 847 A1**
(43) Date of publication of application: **04.10.2000**
(21) Application number: 99107647.2
(22) Date of filing: 16.04.1999
(51) Int. Cl.: H04Q 7/38

(54) **Protecting a predetermined area from disturbing usage of mobile terminals by means of a location updating answer message**

(30) Priority: 12.03.1999 WO PCT/EP99/01642
(71) Applicant: Sony International (Europe) GmbH, 50829 Köln (DE)
(72) Inventor: Weber, Matthias, 81927 München (DE); Winkler, Gregor c/oSony International (Europe)GmbH, 85609 Aschheim (DE)
(74) Representative: Körber, Martin, Dipl.-Phys.

(57) **Abstract**

The present invention relates to a base station (1, 1') and a method for protecting a predetermined area from disturbing usage of mobile terminals of a wireless telecommunication system. Further, the present invention relates to a mobile terminal (7) the operation mode of which can be changed by mode change information received from a base station (1, 1') to protect a predetermined area. A predetermined area might be an area, in which at least a high frequency part of the mobile terminals should be switched off automatically to avoid interference with electronic or electric devices, e. g. in hospital or airplanes. In other areas, e. g. restaurants, operas or the like, it is sufficient to reduce the volume of acoustic signals to be output so that other people in the area are not disturbed. The base station (1, 1') for protecting the predetermined area according to the present invention thereby comprises receiving means (4) for receiving a registration or location update request message from a mobile terminal of said wireless telecommunication system, generating means (2, 2') for generating mode change information for changing an operation mode of the mobile terminals to protect the predetermined area, and transmitting means (3, 3') for transmitting the generated mode change information within the predetermined area by means of a location updating answer message of a control channel of the wireless telecommunication system. The use of the location updating answer message thereby provides a simple and effective way to transmit the mode change information according to the present invention.

## Description

The present invention relates to a base station for protecting a predetermined area from disturbing usage of mobile terminals of a wireless cellular telecommunication system, to a method for protecting a predetermined area from disturbing usage of mobile terminals of a wireless cellular telecommunication system and to a mobile terminal for a wireless cellular telecommunication system.

In many areas the use of mobile terminals of wireless telecommunication systems is regarded as a nuisance for other people, like in restaurants or in the opera, or even dangerous in places like hospitals or airplanes. In the first case particularly audible signals output from mobile terminals are disturbing other people or the spectacle being given. In the second case, the use of mobile terminals, particularly the transmission of high frequency electromagnetic waves, can disturb other electronic devices or the like by interfering with their circuitry what can lead to severe incidents. It is therefore very important to provide a way to protect predetermined areas from a disturbing usage of mobile terminals within these areas. Particularly, the protection of a predetermined area should not depend on the user's will, e. g. on a user's input of information to the mobile terminal.

EP 0 891 110 A1 discloses a method and a system for preventing a mobile terminal from causing disturbance within a predetermined area, e. g. inside a plane or inside of hospitals. Particularly, the disclosed method comprises the steps of transmitting a deactivation signal from a base station to a mobile terminal and deactivating a use of the output of the mobile terminal in response to the deactivation signal. Thereby, the transmission output is deactivated. The base station can either be an ordinary base station or a base station specifically designed for mainly transmitting the deactivation signal. Although EP 0 891 110 A1 describes, that the base station could be an ordinary base station, it is not disclosed how the deactivation signals could be implemented and transmitted in an ordinary telecommunication system.

The object of the present invention is therefore to provide a base station and a method for protecting a predetermined area from disturbing usage of mobile terminals of a wireless cellular telecommunication system, which protects a predetermined area by transmitting mode change information for changing an operation mode of the mobile terminals in a simple and effective way, whereby the mode change information is transmitted on the basis of a wireless cellular telecommunication system. The object of the present invention is further to provide a mobile terminal for a wireless cellular telecommunication system, which can be controlled by such mode change information so that the predetermined area is protected from disturbing use of the mobile terminal.

The above object is achieved by a base station for protecting a predetermined area from disturbing usage of mobile terminals of a wireless cellular telecommunication system, with receiving means for receiving a registration or a location update request message from a mobile terminal of said wireless telecommunication system, generating means for generating mode change information for changing an operation mode of the mobile terminal to protect the predetermined area from disturbing usage of said mobile terminal, and transmitting means for transmitting said generated mode change information within said predetermined area by means of a location updating answer message in a control channel of a wireless telecommunication system.

The above object is further achieved by a method for protecting a predetermined area from disturbing usage of mobile terminals of a wireless cellular telecommunication system, with the steps of receiving a registration or a location update request message from a mobile terminal of said wireless telecommunication system, generating mode change information for changing an operation mode of the mobile terminal to protect the predetermined area from disturbing usage of the mobile terminal, and transmitting said generated mode change information within said predetermined area by means of a location updating answer message of a control channel of a wireless telecommunication system.

Thus, the base station and the method for protecting a predetermined area from disturbing usage of mobile terminals of a wireless cellular telecommunication system enable a simple and effective way to change the operation mode of mobile terminals within the predetermined area automatically so that the predetermined area is protected.

The base station of the present invention can thereby be an ordinary base station of the wireless cellular telecommunication system which additionally to its usual elements comprises the receiving means, the generating means and the transmitting means according to the present invention whereby the receiving means also receives and the transmitting means also transmits normal signalling or user data information of the telecommunication system. Alternatively, the base station of the present invention is a specialised base station with a restricted functionality compared to an ordinary base station. Depending on the required application, the specialised base station could comprise essentially the receiving means, the generating means and the transmitting means according to the present invention without further elements for communicating data in the telecommunication system. This last possibility would present a very simple and cost-effective way to protect certain areas according to the present invention.

The above object is further achieved by a mobile terminal for a wireless cellular telecommunication system, with transmitting and receiving means for transmitting registration or location update requests to a base station of said wireless telecommunication system and for receiving mode change information transmitted from a base station of said telecommunication system by means of location updating answer messages in a control channel of the wireless telecommunication system for protecting a predetermined area from disturbing usage of the mobile terminal, and control means for detecting mode change information received in response to a transmitted registration or location update request and changing an operation mode of the mobile terminal depending on the received mode change information so that said predetermined area is protected.

The wireless cellular telecommunication system can be any known or future system using registration or location update messages in a control channel. After switching on a mobile terminal within a cell of a telecommunication system, the mobile terminal registers with the corresponding network through the base station of the cell. Thereby, the mobile terminal, after an internal initialisation, checks for an available network. When the mobile terminal finds an available network, the mobile terminal is able to read important information such as the location information. Hereby, three cases can be distinguished. In the first case, the mobile terminal always initiates a registration or a location update procedure after being switched on and having synchronised to the cellular system. In this case, the mobile terminal transmits a registration or location update request, e. g. in form of a registration request or the like, to the cellular system through the current base station. The cellular system, through the base station receives the registration or location update request and transmits a registration or location update accept message to the mobile terminal, the registration or location update accept message containing the location information. In the second case, the mobile terminal starts a registration or location update procedure in case that a certain predefined time has elapsed, even though the mobile terminal did not change location. The purpose of this is to notify the system that the mobile station is still present. In the third case, the mobile terminal only starts a registration or location update procedure in case that the location area identity has changed since the mobile terminal was last switched off. A location area can consist of one or more physical cells of the wireless telecommunication system, it is also referred to as paging area. In case that the mobile terminal has not changed the location area since it was last switched off, the mobile terminal would not have to send a registration or location update request to the current base station. However, it is an option of the system to request that a mobile terminal transmits information once it is switched off and likewise when it is switched on again, this is then performed through a registration procedure..

Therefore, if a mobile terminal according to the present invention is switched on within a predetermined area to be protected from disturbing use of the mobile terminal or is entering this area with a different location identifier, the mobile station would initiate a registration procedure, which the base station or one of the base stations within the predetermined area would respond to. According to the present invention, the registration or location update answer message from the base station comprises, consists of or relates to mode change information for changing an operation mode of the mobile terminal.

A periodic location updating can be performed after a period of time predefined by the network within the system information messages, which are constantly sent to all active mobile terminals monitoring the corresponding control channel. When a mobile terminal detects a location area change it will notify the network that it is now located in a different area. As stated above, a mobile terminal could move around within one location area comprising several cells without the need for a registration or a location update by moving from one cell to another. If the mobile terminal moves from one location area to the next location area, however, a location updating has to be performed. Therefore, the predetermined area to be protected from disturbing usage of mobile terminals has to be regarded as a separate different location area in respect to the adjacent location areas of the wireless telecommunication system. If the mobile terminal moves from an adjacent location area into the predetermined area to be protected, a registration or location update will be performed, during which the mobile terminal receives mode change information from the base station within the predetermined area so that an operation mode of the mobile terminal is changed to protect the predetermined area from disturbing usage.

The predetermined area is thereby the restricted area, in which the particular base station transmits the mode change information. E. g., such a predetermined area could be a hospital or a small area around the boarding gate of an airport or inside a plane.

The advantage of the described invention is that it does not rely on peoples responsibility to switch off their phones, but that it will perform this automatically. This will provide much higher safety to the areas to be protected.

Furthermore the mode change information is addressed to individual phones to prevent them from disturbing usage.

A further advantage is that the described invention will only require a very small upgrade to existing systems and therefore additional investment in infrastructure is not necessary. All the described areas can be performed by changes to the software of the infrastructure. The impact on mobile terminals is also kept to a minimum in order to avoid any major impact on the cost of those terminals.

Advantageously, the mode change information replace at least partially a registration or location updating answer message in the control channel. Alternatively, the mode change information is new additional information to the registration or location updating answer message in the control channel. In this case, the mode change information can be additional information to a registration or location updating accept message comprised in the registration or location updating answer message. Further, the mode change information can correspond to a registration or location updating reject message comprised in a registration or location updating answer message.

Further, the mode change information can comprise special information for changing a mode only of one or more mobile terminals which are individually addressed by said special information. In this case, the special information can be address information individually directed to particular mobile terminals, the mode of which is changed upon receiving the mode change information, whereas other mobile terminals within the predetermined area are not addressed and not mode changed. This solution might be advantageous in predetermined areas, in which the operation mode of only a part of the mobile terminals should be changed and some of the mobile terminals within the predetermined area, e. g. mobile terminals of security personal or the like, should remain usable.

In case that the mode change information replace the registration or location update answer message, the base station according to the present invention can be built very simple and cheap, since it only needs to transmit the mode change information on a particular control channel and does not need to transmit further information. A mobile terminal switched on within the predetermined area receives the mode change information instead of the registration or location update answer message and changes its operation mode correspondingly.

Advantageously, the receiving means of the base station regularly provides a control channel for receiving location updating requests. The generating means advantageously generates mode change information for switching off at least a high frequency portion of a mobile terminal receiving said mode change information. The high frequency portion of a mobile terminal, which comprises e. g. upconverting and downconverting means, is the most important part of a mobile terminal to be switched off for avoiding interference with the circuitry of other electronic or electric devices in the predetermined area.

Alternatively, the generating means generate mode change information for switching a mobile terminal receiving the mode change information into a silent mode, e. g. a ringer off or a vibrating device on mode. In the silent mode, audible or acoustic signals output from the mobile terminal are at least reduced to low volume to avoid a disturbance in the predetermined area. Advantageously, the audible signals are completely suppressed and replaced by visual signals, vibrating signals or other non-audible signals.

Advantageously, the mobile terminal of the present invention maintains the changed mode as long as the mode change information is received and detected. The mobile terminal could thereby regularly check if the change mode information is still received regularly and changes its mode as soon as the mode change information is not received anymore. The mobile terminal could further comprise a timing means for calculating the time period since the last reception and detection of a mode change information and for comparing the time period with a predetermined time threshold, whereby the mobile terminal is reset to the original mode in case that the time period exceeds the time threshold. Alternatively, the control means maintains the changed mode until a time period received as time information with the mode change information has expired, whereby the mobile terminal is reset to the original mode thereafter. In addition the mode change information may contain a minimum time indication on how long the mode change should apply.

Advantageously, the control means regards a location updating reject message containing certain change mode information comprised in a received location updating answer message as said mode change information.

Advantageously, the transmitting and receiving means of the mobile terminal receives the special information comprised in the mode change information, whereby the special information individually addresses only one or more mobile terminals to change a mode thereof, and said control means of the mobile terminal determines on the basis of the special information if the mobile terminal is addressed and changes its mode in this case.

Advantageously, the control means, upon detecting mode change information, switches off at least the transmitting part of a high frequency portion of the mobile terminal. The mobile terminal could still receive reset messages, which reset the change mode, through its receiver. However, the receiver still would emit high frequency signals which could disturb other equipment. In case that there is no requirement for reset messages the whole high frequency part of the mobile terminal could be switched off. Further, the entire mobile terminal could be switched off. Alternatively, the control means detecting mode change information switches the mobile terminal into a silent mode, e. g. a ringer off or a vibrating device on mode. As stated above, the silent mode is a mode in which audible or acoustic signals output from the mobile terminal are at least reduced in volume so that disturbance within the predetermined area is avoided. In case that the audible or acoustic signals are suppressed completely, they are replaced by visual signals, vibration signals or the like.

In case that the mobile terminal is located in a location area adjacent to the predetermined area, the transmitting and receiving means of the mobile terminal periodically receives information on the location of the mobile terminal from the current base station. Approaching the predetermined area to be protected, the mobile terminal will detect a location area change by receiving location area information from a base station within the predetermined area to be protected. The mobile terminal will then perform the above-described registration or location update procedure and change its operation mode upon receiving the mode change information. In case that the user is in a telephone conversation and approaches the predetermined area, the cellular system will realise from measurements performed by the mobile terminal that it is approaching the predetermined area and will then be able to issue a warning information, either through audible sounds, e. g. the earpiece or the ringer, or by signalling information to the mobile terminal, which will then behave according to the pre-set behaviour. The user will thus be able to either terminate the conversation or step away from the predetermined area to be able to continue his conversation without the operation mode of the mobile terminal being changed.

In the following description, the present invention is explained in more detail by means of preferred embodiments thereof relating to the enclosed drawings, in which
figure 1 shows a block diagram of a base station according to the present invention and;
figure 2 shows a block diagram of a reduced base station according to the present invention and;
figure 3 shows a block diagram of a mobile terminal according to the present invention and;
figure 4 shows a principle outline of standard cellsites adjacent to areas to be protected according to the present invention and;
figure 5 shows the principle system architecture of a cellular network according to the present invention.

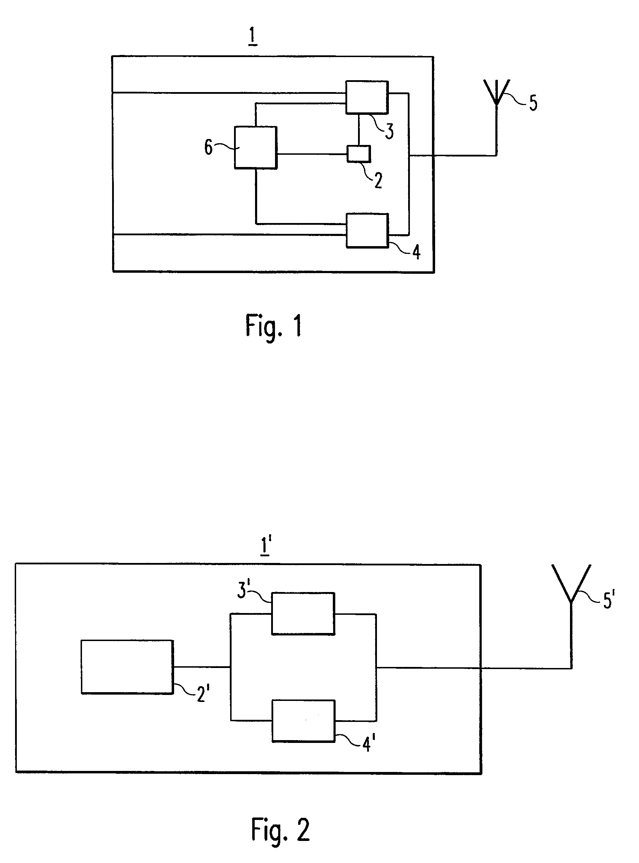

The base station 1 shown in figure 1 is a base station for protecting a predetermined area from disturbing usage of mobile terminals of a wireless cellular telecommunication system. The base station 1 comprises generating means 2 for generating mode change information for changing an operation mode of the mobile terminals within the predetermined area to protect the predetermined area. The base station 1 further comprises transmitting means 3 for transmitting mode change information generated in the generating means 2 within the predetermined area using location updating answer messages in a control channel of the wireless telecommunication system. The base station 1 further comprises receiving means 4 for receiving a registration or location update request message from a mobile terminal of the wireless telecommunication system. The transmitting means 3 transmits mode change information generated in the generating means 2 in response to a registration or location update request received from a mobile terminal.

The base station 1 can be a normal base station for transmitting and receiving signals in the wireless cellular telecommunication system or a special base station 1' as outlined in figure 2 only transmitting the mode change information for protecting the predetermined area upon receiving a registration or location update request. In the first case, the transmitting means 3 and the receiving means 4 are further adapted for transmitting and receiving user data and signalling data in a wireless cellular telecommunication system.

The reduced base station 1' of figure 2 essentially comprises only a receiving means 4', a generating means 2' and a transmitting means 3', so that a very simple and cost-effective solution is achieved. The base station 1' in this case only serves for transmitting the mode change information within the predetermined area without having further capabilities.

Of course, the base station 1 in figure 1 comprises further elements which are necessary to operate the base station 1 in the respective telecommunication system, e. g. a control means 6 and so on. The base station 1 operates and transmits the mode change information on the basis of the wireless cellular telecommunication system, i. e. the GSM-system or the like. This has the advantage that mobile terminals entering the predetermined area can be addressed on the basis of the wireless cellular telecommunication system to change an operation mode thereof to protect a predetermined area without requiring a different receiving section for the mode change information transmitted from the base station 1. This has the additional advantage that the mobile terminals, as e. g. the mobile terminal 7 shown in figure 2, can be common mobile terminals for the wireless telecommunication system, which only need to be adapted to receive and process the mode change information. Thus, the configuration of normal mobile terminals for the wireless telecommunication system does not need to be changed essentially.

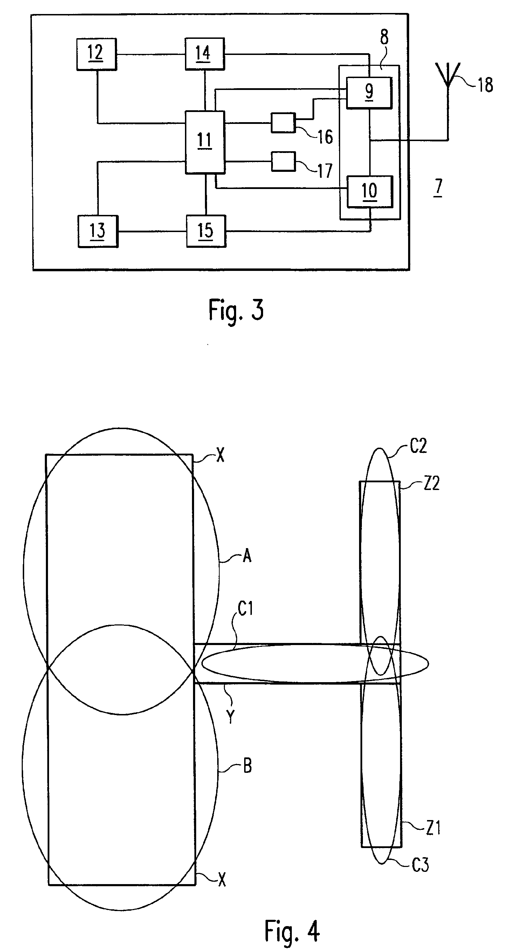

In figure 3, a block diagram of a mobile terminal 7 according to the present invention is shown. The mobile terminal 7 comprises transmitting and receiving means 8 for transmitting information to and receiving information from base stations of the wireless cellular telecommunication system. The transmitting and receiving means 8 is further adopted to transmit registration or location update requests to a base station of the telecommunication system and to receive mode change information transmitted from the base station by means of or using location updating answer messages of the wireless telecommunication system for protecting the predetermined area, in which the base station transmitting the mode change information is located, from disturbing use of the mobile terminal 7. E. g., the base station transmitting the mode change information can be the base station 1 of figure 1 or the reduced base station of figure 2. The transmitting and receiving means 8 comprises a transmitting unit 9 and a receiving unit 10. The receiving unit 10 of the transmitting and receiving means 8 receives signals by means of an antenna 18. The received signals are then processed in the mobile terminal 7 under control of a control means 11. E. g., the received signals are decoded in a decoding means 15, whereby further processing steps depending on the structure of the signals might be taken. At the end of the processing, the signals are transformed into audible signals and output from a loudspeaker 13 in case they are voice signals, or answered by the mobile terminal in case they are signalling information, or passed on to the data part or a data device in case they are data signals.

The mobile terminal 7 further comprises a microphone 12 for receiving and detecting acoustic signals. The signals input in the microphone 12 are further processed under the control of the control means 11, e. g. coded in a coding means 14 and so on depending on the structure of the signals in the telecommunication system, and then transmitted by the transmitting unit 9 through the antenna 18. The mobile terminal 7 comprises further elements for processing received signals and signals to be transmitted besides the decoding means 15 and the coding means 14 as shown in figure 3. The additional elements depend on the structure of the signals in the wireless telecommunication system, so that a large variety of further processing units can be implemented.

The mobile terminal 7 further comprises a generating means 16 connected between the control means 11 and the transmitting unit 9 and a timing means 17 connected with the control means 11.

Figure 4 shows the topography of e. g. an airport terminal, where areas A and B are the coverage areas of a cell site, covering the waiting lounges, X. Areas C1, C2 and C3 indicate the coverage area of cell sites covering a predetermined area, e. g. the gangway towards an airplane, Y, Z1 and Z2. As long as a user is making phone calls or is walking in areas "A" and "B" his phone will work normal and nothing will happen. Once he is approaching the area "C1" the network may issue warning indications to the phone while it is in communication, warning the user that he is coming closer to a predetermined area. Once the user enters the area "C1", "C2" or "C3" the telephone will receive the mode change information and change its mode accordingly. This functionality not necessarily requires separate cell sites, this could also be handled in area "C1" alone.

The base station 1 being located in an area which has to be protected from a disturbing usage of mobile terminals, transmits mode change information which is received by mobile terminals, as e. g. a mobile terminal 7, entering the predetermined area to change an operation mode thereof so that the area is protected.

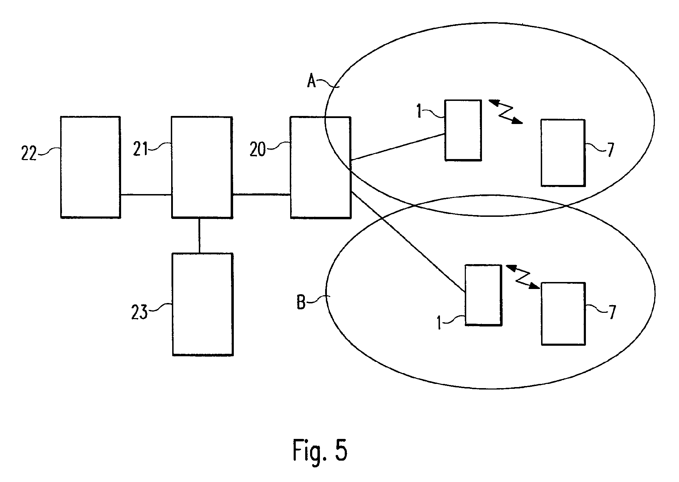

Figure 5 shows the basic structure of a cellular system, which comprises at least two base stations 1, covering the areas A and B, a base station controller 20, a switch 21 with a gateway to a public telephone network 22, a register 23 which keeps information on the terminals of this cellular network and possibly of visiting mobile terminals and the mobile terminals 7 themselves. The base stations are connected with the base station controller via a communication and signalling link, the base station controller and the switch is connected via a communication and signalling link, the register and the switch are connected by a communication and signalling link, as well as the switch and the public telephone network. The mobile terminals 7 and the base stations 1 communicate by means of radio transmission.

Thereby, the mode change information is transmitted from the cellular system through the base station 1 on the basis of or using location updating answer messages answering registration or location update requests received from a mobile terminal.

The mode change information generated in the generating means 2 of the base station 1 can be additional information to the location updating answer messages or can replace at least partially the location updating answer messages in the control channel.

The mode change information generated in the generating means 2 of the base station 1 can additionally comprise special information for changing the operation mode only of one or more mobile terminals which are individually addressed by said special information. Thus, the special information can contain address information addressing particularly specified mobile terminals. A mobile terminal receiving the mode change information, as e. g. the mobile terminal 7, receives the special information comprised in the mode change information with the transmitting and receiving means 8, whereby the control means 11 determines on the basis of the special information if the mobile terminal 7 is addressed and changes the operation mode of the mobile terminal 7 if this is the case.

As stated above, a simple and cost-effective version of the base station 1 essentially comprises the receiving means 4, the generating means 2 and the transmitting means 3 so that only mode change information is generated and transmitted by the base station 1. In this case, the location updating answer message does not need to contain additional information and it is sufficient only to transmit the mode change information instead of the location updating answer message in the control channel. The mobile terminal 7 will then receive only the mode change information and change its mode correspondingly. In a more developed version of the base station 1 the mode change information replace only a part of the location updating answer message in the control channel, so that further information like the reason for the mode change, the level of the mode change, the duration of the mode change or the like can be transmitted to the mobile terminal 7. Particularly, the mobile terminal 7 does not need to register with the base station 1 for protecting the predetermined area. It is sufficient, when the mobile terminal 7 receives the mode change information from the base station 1 to change its mode to protect the area. The base station 1 of the predetermined area to be protected is thereby treated as a normal neighbouring base station of an adjacent cell and location area, respectively.

In any case, the control means 11 of the mobile terminal 7 can cause the loudspeaker 13 to output an alarm signal to warn a user that he is approaching, when notified by the system or within the predetermined area to be protected and that the operation mode of the mobile terminal 7 will be changed soon to protect the area. Thus, the user can decide to get away from the predetermined area or, in case that a call is in progress, he can terminate the conversation quickly.

Upon receiving a mode change information by the transmitting and receiving means 8, the control means 11 of the mobile terminal 7 detects the mode change information and changes the mode of the mobile terminal 7 depending on the received mode change information so that the predetermined area is protected. The control means 11 can thereby maintain the changed mode as long as mode change information is regularly received and detected. As soon as mode change information is not received any longer, the mobile terminal 7 is reset to its original mode before the mode change. The timing means 17 of the mobile terminal 7 may calculate the time period since the last reception and detection of the mode change information and for comparing the time period with a predetermined time threshold, whereby the mobile terminal 7 is reset to the original mode in case that the time period exceeds the time threshold. If a time indication is present in the mode change information, the mobile terminal must not attempt a reset before the indicated time.

Alternatively, the control means 11 maintains the changed mode until the time period received as time information together with the mode change information has expired, whereby the mobile terminal 7 is reset to the original mode thereafter. In this case, the generating means 2 of the base station 1 needs to generate additional time information to the mode change information to indicate how long the changed mode in the mobile terminal 7 should be maintained. Another possibility is to store the time information in the mobile terminal 7 so that the time period during which the changed mode has to be maintained is provided by the mobile terminal 7 itself.

If e. g. the predetermined area to be protected is a hospital, where it has to be assured that mobile terminals are not used, the mobile terminals advantageously maintain their changed mode as long as the mode change information is received. In this case, one or more base stations 1 are located in the hospital and regularly broadcast the mode change information. In other areas, e. g. hospitals, it might be only important to change the mode of mobile terminals during a short period of time. Thus, a base station 1 could be located at the entrance, so that the operation mode of mobile terminals entering the hospital are changed. The changed mode only needs to be maintained during the visit. Thus, a predetermined time period, e. g. 30 minutes, 60 minutes or the like, is sufficient and the mobile terminals could be reset to their original modes after expiration of this predetermined time period. A further possibility might be to change the mode of mobile terminals upon receiving a mode change information, e. g. at a boarding gate of an airport, to maintain the changed mode during the flight and to reset the mode of the mobile terminals upon receiving a second mode change information at the exit gate of the airport on the arrival.

Depending on the received mode change information, the control means 11 of the mobile terminal 7 changes the operation mode thereof. If areas like a hospital or airplanes are to be protected, the control means 11 switches off at least a high frequency portion of the mobile terminal 7. The high frequency portion of the mobile terminal is the part causing interference with other electronic or electric devices and thus the operation of the high frequency part should be suppressed. In case of the mobile terminal 7 shown in figure 3, the control means 11 could switch off at least the transmitting unit 9 of the transmitting and receiving means 8 upon receiving a mode change information. The mobile terminal 7 is then still able to receive signals by means of the receiving unit 10, e. g. to receive information to reset the mobile terminal 7 to its original mode. Alternatively, the control means 11 could switch off the entire transmitting and receiving means 8 so that neither the transmission nor the reception of signals is possible any longer. In both cases, however, the base band functions could still be available, so that a user still can edit information, input information to the internal telephone book, store messages to be transmitted later on and the like.

In other areas, e. g. restaurants, operas, theatres or the like, it is sufficient to change the mode of the mobile terminal 7 into a silent mode, in which other people in the same area are not annoyed by audible or acoustic signals output from the mobile terminal 7. Thereby it might be sufficient if the control means 11 simply reduces the volume of the acoustic signals to be output by the loudspeaker 13. Further, the volume of signals to be output by the loudspeaker 13 could be completely suppressed. Additionally to the reduced volume signals or replacing the suppressed audible signals, the control means 11 might cause the output of the visual signals on a display of the mobile terminal 7, the activating of a vibration device of the mobile terminal 7 or the like to indicate incoming phone calls to a user.

## Claims

1. Base station (1, 1') for protecting a predetermined area from disturbing usage of mobile terminals of a wireless cellular telecommunication system, with
receiving means (4, 4') for receiving a registration request message from a mobile terminal of said wireless telecommunication system,
generating means (2, 2') for generating mode change information for changing an operation mode of said mobile terminal to protect said predetermined area from disturbing usage of said mobile terminal, and
transmitting means (3, 3') for transmitting said generated mode change information within said predetermined area to said mobile station by means of a location updating answer message in a control channel of said wireless telecommunication system in response to a received registration request.

2. Base station (1, 1') according to claim 1,
**characterized in**,
that said mode change information replace said location updating answer message in said control channel.

3. Base station (1, 1') according to claim 1,
**characterized in**,
that said mode change information are new additional information to a location updating answer message.

4. Base station (1, 1') according to claim 3,
**characterized in**,
that said mode change information are additional information to a location updating accept message comprised in a location updating answer message.

5. Base station (1, 1') according to claim 1,
**characterized in,**
that said mode change information corresponds to a location updating reject message comprised in a location updating answer message.

6. Base station (1, 1') according to one of the claims 1 to 5,
**characterized in**,
that said transmitting means regularly provides a control channel for receiving location updating requests.

7. Base station (1, 1') according to one of the claims 1 to 6,
**characterized in,**
that said generating means (2, 2') generates mode change information for switching off at least a high frequency portion of a mobile station receiving said mode change information.

8. Base station (1, 1') according to one of the claims 1 to 6,
**characterized in**,
that said generating means (2, 2') generates mode change information for switching a mobile station receiving said mode change information into a silent mode, e.g. ringer off, vibrating device on.

9. Base station (1, 1') according to one of the claims 1 to 8,
**characterized in**,
that said generating means (2, 2') generates time information additionally to said mode change information for indicating a time period during which the changed mode of a mobile station is to be maintained.

10. Base station (1, 1') according to one of the claims 1 to 9,
**characterized in**,
that said generating means (2, 2') generates information on the reason of the mode change additionally to said mode change.

11. Method for protecting a predetermined area from disturbing usage of mobile stations of a wireless cellular telecommunication system, with the steps of receiving a registration request message from a mobile terminal of said wireless telecommunication system,
generating mode change information for changing an operation mode of said mobile terminal to protect said predetermined area from disturbing usage of said mobile terminal, and
transmitting said generated mode change information within said predetermined area by means of a location updating answer message in a control channel of said wireless telecommunication system in response to a received registration request.

12. Method according to claim 11,
**characterized in**,
that said mode change information replaces said location updating answer message in said control channel.

13. Method according to claim 11,
**characterized in**,
that said mode change information are new additional information to a location updating answer message.

14. Method according to claim 13,
**characterized in**,
that said mode change information are additional information to a location updating accept message comprised in a location updating accept message.

15. Method according to claim 11 or 12,
**characterized in**,
that said mode change information corresponds to a location updating reject message comprised in said location updating answer message.

16. Method according to one of the claims 11 to 15,
**characterized in**,
that said transmitting means regularly provides a control channel for receiving location updating requests.

17. Method according to one of the claims 11 to 16,
**characterized in**,
that said mode change information switches off at least a high frequency portion of a mobile station receiving said mode change information.

18. Method according to one of the claims 11 to 16,
**characterized in**,
that said mode change information switches a mobile station receiving said mode change information into a silent mode, e.g. ringer off, vibrating device on.

19. Mobile terminal (7) for a wireless cellular telecommunication system, with transmitting and receiving means (8) for transmitting registration requests to a base station of said telecommunication system and for receiving mode change information transmit from said base station by means of location updating answer messages of said wireless telecommunication system for protecting a predetermined area from disturbing use of the mobile terminal,
control means (11) for detecting mode change information received in response to a transmitted location updating request and changing a mode of the mobile terminal depending on the received mode change information so that said predetermined area is protected from disturbing usage of the mobile terminal.

20. Mobile terminal (7) according to claim 19,
**characterized in**,
that said control means (11) maintains said changed mode as long as the mode change information is received and detected.

21. Mobile terminal (7) according to claim 19 or 20,
**characterized in**,
that a timing means (17) for calculating the time period since the last reception and detection of said mode change information and for comparing said time period with a predetermined time threshold is provided, whereby the mobile terminal (7) is reset to the original mode in case that the time period exceeds said time threshold.

22. Mobile terminal (7) according to claim 19 or 20,
**characterized in**,
that said changed mode is maintained until a time period received as time period information with said mode change information has expired, whereby the mobile terminal is reset to the original mode thereafter.

23. Mobile terminal (7) according to one of the claims 19 to 22,
**characterized in**,
that said control means regards a location updating reject message comprised in a received location updating answer message as said mode change information.

24. Mobile terminal (7) according to one of the claims 19 to 22,
**characterized in**,
that said transmitting and receiving means (8) receives a special information comprised in said mode change information, whereby said special information individually addresses only one or more mobile terminals to change a mode thereof, and said control means (11) determines on the basis of said special information if the mobile terminal is addressed and changes a mode if this is the case.

25. Mobile terminal (7) according to one of the claims 19 to 24,
**characterized in**,
that said control means (11) detecting said mode change information switches off at least a high frequency portion of the mobile terminal.

26. Mobile terminal (7) according to one of the claims 19 to 24,
**characterized in**,
that said control means (11) detecting said mode change information switches the mobile terminal into a silent mode, e.g. ringer off, vibrating device on.
